(19)

Europäisches
Patentamt
European
Patent Office
Office européen
des brevets

(11)  **EP 4 386 900 A1**

(12)  **EUROPEAN PATENT APPLICATION**

(43) Date of publication:
**19.06.2024  Bulletin 2024/25**

(21) Application number: **23191888.9**

(22) Date of filing: **17.08.2023**

(51) International Patent Classification (IPC):
*H01M 4/36* $^{(2006.01)}$   *H01M 4/525* $^{(2010.01)}$
*H01M 4/58* $^{(2010.01)}$   *H01M 4/62* $^{(2006.01)}$

(52) Cooperative Patent Classification (CPC):
**H01M 4/366; H01M 4/525; H01M 4/5825;**
**H01M 4/62;** H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.11.2022  KR 20220157579**

(71) Applicants:
• **SK On Co., Ltd.**
**Seoul 03161 (KR)**
• **SK Innovation Co., Ltd.**
**Seoul 03188 (KR)**

(72) Inventors:
• **KANG, Min Suk**
**34124 Daejeon (KR)**
• **DO, Ji Yae**
**34124 Daejeon (KR)**
• **BEAK, Min Cheol**
**34124 Daejeon (KR)**
• **YUN, Jung Hyun**
**34124 Daejeon (KR)**
• **LEE, Kwang Ho**
**34124 Daejeon (KR)**
• **LEE, Hyun Ji**
**34124 Daejeon (KR)**

(74) Representative: **Bird & Bird LLP**
**Maximiliansplatz 22**
**80333 München (DE)**

(54)  **CATHODE ACTIVE MATERIAL FOR LITHIUM SECONDARY BATTERY AND LITHIUM SECONDARY BATTERY INCLUDING THE SAME**

(57)  A cathode active material for a lithium secondary battery according to an embodiment includes a plurality of a lithium metal oxide particle that include a core containing a lithium iron phosphate-based compound and being doped with at least one metal element of Ti, V and Mn; and a carbon coating formed of the core. A ratio of an intensity of a peak corresponding to $PO_4$ relative to an intensity of a D band measured by a Raman spectroscopy analysis is in a range from 0.10 to 0.33.

FIG. 1

**Description**

BACKGROUND

1. Field

The present invention relates to a cathode active material for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery includes, e.g., a lithium secondary battery, a nickel-cadmium battery, a nickel-hydrogen battery, etc. The lithium secondary battery is widely developed and applied due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium metal oxide may be used as a cathode active material of the lithium secondary battery. As an application range of the lithium secondary battery is expanded, longer life-span, higher capacity and higher energy density are required. However, when the energy density, capacity and power from the lithium metal oxide are increased, stability and capacity retention from the lithium metal oxide may be deteriorated.

SUMMARY

According to an aspect of the present invention, there is provided a cathode active material for a lithium secondary battery having improved power property and stability.

According to an aspect of the present invention, there is provided a lithium secondary battery having improved power property and stability.

A cathode active material for a lithium secondary battery includes a plurality of a lithium metal oxide particle that includes a core containing a lithium iron phosphate-based compound and being doped with at least one metal element of Ti, V and Mn; and a carbon coating formed on the core. A ratio of an intensity of a peak corresponding to $PO_4$ relative to an intensity of a D band measured by a Raman spectroscopy analysis is in a range from 0.10 to 0.33.

In some embodiments, the intensity of the D band is a maximum value of a peak intensity measured at a Raman shift from 1200 $cm^{-1}$ to 1400 $cm^{-1}$, and the intensity of the peak corresponding to $PO_4$ is a maximum value of a peak intensity measured at a Raman shift from 945 $cm^{-1}$ to 955 $cm^{-1}$.

In some embodiments, the ratio of the intensity of the peak corresponding to $PO_4$ relative to the intensity of the D band measured by the Raman spectroscopy analysis may be greater than 0.10 and less than or equal to 0.30.

In some embodiments, a ratio of the intensity of the peak corresponding to $PO_4$ relative to an intensity of a G band measured by the Raman spectroscopy analysis may be in a range from 0.10 to 0.33.

In some embodiments, the intensity of the G band is a maximum value of a peak intensity measured at a Raman shift from 1,500 $cm^{-1}$ to 1,700 $cm^{-1}$.

In some embodiments, the ratio of the intensity of the peak corresponding to $PO_4$ relative to the intensity of the G band measured by the Raman spectroscopy analysis may be in a range from 0.7 to 1.1.

In some embodiments, a doping content of the metal element in the core may be in a range from 300 ppm to 8,000ppm based on a total weight of the core.

In some embodiments, the core may be doped with Ti or V.

In some embodiments, the core may further include another doping metal other than Ti, V and Mn.

In some embodiments, the core may include a compound represented by Chemical Formula 1 below.

[Chemical Formula 1]     $Li_xFe_yM1_aM2_bP_zO_4$

In Chemical Formula 1, M1 may include at least one of Ti, V and Mn, and M2 may include at least one of Mg, Ca, Sr, Y, Zr, Ba, Ni and Co, and $0.9 \leq x \leq 1.1$, $0.1 \leq y \leq 1.01$, $0.96 \leq z \leq 1.04$, $0 < a \leq 0.9$, $0 \leq b < 0.9$ and $0 < a+b \leq 0.9$.

In some embodiments, a content of the carbon coating may be in a range from 0.5 wt% to 2.3 wt% based on a total weight of the lithium metal oxide particle.

In some embodiments, a thickness of the carbon coating may be in a range from 1 nm to 50 nm.

In some embodiments, an average particle diameter (D50) of the plurality of lithium metal oxide particle may be in a range from 0.2 $\mu$m to 15 $\mu$m.

A lithium secondary battery includes a cathode including the cathode active material for a lithium secondary battery according to the above-described embodiments, and an anode facing the cathode.

A cathode for a lithium secondary battery according to embodiments of the present disclosure includes lithium metal oxide particles which include a core containing a lithium iron phosphate and a carbon coating formed on the core. Thus, the lithium metal oxide particles may have high structural and chemical stability, and electrical conductivity may be improved by the carbon coating. The core may be doped with Ti, V or Mn. Accordingly, an additional ion movement path may be achieved at an inside of a crystal lattice of the particle, and am ionic conductivity may be improved.

In the cathode active material, intensity ratios of peaks corresponding to a D band, a G band and $PO_4$ measured by a Raman spectroscopy may be within a predetermined range. Accordingly, a thin and uniform carbon coating may be formed on a surface of the core, and thus a lithium secondary battery having high stability may be provided without deterioration of power and capacity.

BRIEF DESCRIPTION OF THE DRAWINGS

FIG. 1 is a schematic plan view illustrating a lithium secondary battery in accordance with exemplary embodiments.
FIG. 2 is a schematic cross-sectional view illustrating a lithium secondary battery in accordance with exemplary embodiments.

DETAILED DESCRIPTION OF THE EMBODIMENTS

According to embodiments of the present disclosure, a cathode active material including a lithium metal oxide, a cathode including the cathode active material and a lithium secondary battery including the cathode active material are provided.

Hereinafter, embodiments of the present disclosure will be described in detail with reference to exemplary embodiments and the accompanying drawings. However, those skilled in the art will appreciate that such embodiments and drawings are provided to further understand the spirit of the present invention and do not limit subject matters to be protected as disclosed in the detailed description and appended claims.

<Cathode for Lithium Secondary Battery>

A cathode active material for a rechargeable lithium battery according to example embodiments (hereinafter, that may be abbreviated as a cathode active material) may include a compound capable of reversibly intercalating and de-intercalating lithium ions.

The cathode active material includes lithium metal oxide particles. The lithium metal oxide particle includes lithium and iron (Fe) and at least one other metal element.

The lithium metal oxide particle includes a core containing a lithium metal oxide, and a carbon coating formed on the core.

The core includes a lithium iron phosphate-based compound. The core may provide cathode activity to the lithium metal oxide particle.

The lithium iron phosphate-based compound may have an olivine structure and may have high thermal and chemical stability. Thus, heat generation and thermal runaway may be suppressed even in instantaneous high voltage or high current environment during charging and discharging of the lithium secondary battery.

The lithium iron phosphate-based compound may have high structural stability and may suppress damages such as generation of cracks in particles due to repetitive charging and discharging, physical impact or side reactions. Thus, cycle properties at high or low temperature may be improved, and electrode density may become increased.

The carbon coating may be uniformly formed on an outer surface of the core. Thus, stability and electronic conductivity of the lithium metal oxide particle may be improved.

For example, lithium ions of the lithium iron phosphate-based compound may be present at octahedral sites in an oxygen arrangement having a hexagonal close-packed structure, and thus the lithium ions may move in a one-dimensional path along the octahedral sites. Accordingly, the lithium ions and electrons may move through a unidirectional movement path, and at a diffusion rate may become decreased as a length of the movement path increases thereby reducing an electronic conductivity.

The carbon coating has a relatively high electronic conductivity to compensate for the conductivity of the core. Accordingly, the conductivity of the lithium metal oxide particle may be increased, and an electron transfer, e.g., from an inside to an outside of the core or between particles may be promoted.

Additionally, the carbon coating may cover the outer surface of the core, so that a direct contact between the core and an electrolyte may be blocked. Accordingly, side reactions between the core and the electrolyte may be suppressed, and capacity and power degradation due to defects or damages of the core and an irreversible consumption of the electrolyte may be prevented.

A ratio ($PO_4$/D) of a peak intensity corresponding to $PO_4$ to an intensity of a D band of the cathode active material measured by a Raman spectroscopy is in a range from 0.10 to 0.33.

The intensity of the D band may be a maximum value of a peak intensity measured from a Raman shift in a range from 1200 $cm^{-1}$ to 1400 $cm^{-1}$. The D band is a peak derived from a sp3 bonding of a carbon-based material, and the intensity of the D band may be mainly derived from the carbon coating.

The intensity of the peak corresponding to $PO_4$ may be a maximum value of a peak intensity measured at a Raman shift in a range from 945 $cm^{-1}$ to 955 $cm^{-1}$. The $PO_4$ peak is a peak derived from a lattice structure of a $PO_4$ tetrahedron, and the intensity of the $PO_4$ peak may be mainly originated from the core.

When the above range of the intensity ratio of the $PO_4$ peak to the D band ($PO_4$/D), low-temperature output characteristics and capacity characteristics of the lithium secondary battery may be improved.

For example, if the $PO_4$/D ratio is greater than 0.33, a coverage of the carbon coating on the core may be reduced and degradation of the particle may be concentrated or accelerated in a portion where the carbon coating is not formed. Further, the carbon coating may be locally non-uniformly formed, and thickness variation of the carbon coating according to a region of the core may be increased to reduce electrode density and energy density.

For example, if the $PO_4$/D ratio is less than 0.10, the carbon coating may become excessively thick, and the energy density and charge/discharge capacity of the lithium metal oxide particles may be decreased due to an increase of an inactive area. Further, stress may be applied to the core by the carbon coating to cause damages to the lattice or crystal structure of the core.

In an embodiment, the ratio ($PO_4$/D) of the peak intensity corresponding to $PO_4$ relative to the intensity of the D band of the cathode active material measured by the Raman spectroscopy may be greater than 0.10 and less than or equal to 0.33, for example, from 0.13 to 0.33, from 0.15 to 0.30, or from 0.18 to 0.29. Within the above range, the thin and uniform carbon coating may be formed on the core, so that the energy density and low-temperature power properties of the lithium secondary battery may be improved while enhancing structural stability and cycle properties.

In example embodiments, a ratio of the intensity of the peak corresponding to $PO_4$ to an intensity of a G band of the cathode active material measured by the Raman spectroscopy may be in a range from 0.10 to 0.33.

The intensity of the G band of the cathode active material may be a maximum value of a peak intensity measured at a Raman shift in a range from 1500 $cm^{-1}$ to 1700 $cm^{-1}$. The G band is a peak derived from a sp2 bonding of a carbon-based material, and the intensity of the G band may be a value mainly derived from the carbon coating.

Within the above range, a high-density electrode can be implemented while improving structural stability of the particles and preventing cracks by adjusting the crystal structure and core-shell structure of the lithium metal oxide particle. Additionally, a contact between the core and the electrolyte may be prevented so that degradation of the particles and generation of gas may be suppressed, and cycle and power properties at low temperature may be enhanced.

In an embodiment, the $PO_4$/G ratio may be greater than 0.10 and less than or equal to 0.33, e.g., from 0.13 to 0.33, from 0.14 to 0.30, or from 0.16 to 0.25. Within the above range, uniformity of the carbon coating may be further improved, and the low-temperature capacity, low-temperature power properties and chemical stability of the lithium secondary battery may be further improved.

In some embodiments, the cathode active material may have the $PO_4$/D ratio of 0.17 or more and the $PO_4$/G ratio of 0.14 or more. Within the above range, the thin and uniform carbon coating may be more efficiently formed on the surface of the core. Accordingly, an amount of the carbon coating for coating the core may be reduced and a small amount of the carbon coating can be used, so that a volume of the active material layer may be reduced and the energy density may be improved.

In some embodiments, a ratio (D/G) of the intensity of the D band to the intensity of the G band of the cathode active material may be in a range from 0.70 to 1.1.

The D band is a peak derived from the sp3 bonding in the carbon-based material, and the sp3 bonding may be formed by a breakage of atomic bonds formed of the sp2 bonding. The D band may increase when a disorder or a defect existing in the carbon-based material is generated, and the crystalline disorder or defect may be quantitatively evaluated by measuring the intensity of the D band with respect to the G band.

Within the above range, an internal resistance of the carbon coating may be reduced to improve the electronic conductivity, and the cathode activity and stability of the lithium metal oxide particle may be improved.

For example, if the D/G ratio exceeds 1.1, an amorphous region of the carbon coating may be increased and a contact resistance between the core and the carbon coating and between the carbon coatings may be increased. Further, mechanical properties of the carbon coating may be deteriorated. For example, if the D/G ratio is less than 0.70, the uniform carbon coating may not be formed on the core due to high crystallinity of the carbon coating. Accordingly, the lithium metal oxide particles may have rough surface properties, and cycle properties may be deteriorated due to high specific surface area.

In one embodiment, the ratio (D/G) of the intensity of the D band to the intensity of the G band of the cathode active material may be in a range from 0.70 to 1.10, from 0.80 to 1.0, or from 0.85 to 0.95.

For example, in the range of the D/G ratio is 0.85 or more, the electronic conductivity of the carbon coating may be further improved while achieving a high coating coverage ratio. Accordingly, stability and life-span properties of the cathode active material may be further improved without degradation of low-temperature power and capacity.

In an embodiment, 100 or more, 200 or more, or 500 or more arbitrary points may be designated from a group of the dispersed lithium metal oxide particles, and the Raman spectroscopy analysis may be performed for each point, and then an arithmetic mean value may be fitted therefrom. As the number of measurement points increases, accuracy and reliability of measurement may be enhanced.

In an embodiment, the Raman spectroscopic analysis may be performed using a Raman spectroscopic analyzer (e.g., in Via by Renishaw) at a 532 nm wavelength laser, 1 $\mu$m spot size, 0.5-20 mW power and room temperature and atmospheric atmosphere.

The core is doped with Ti, V and/or Mn. For example, the core may include a lithium iron phosphate-based compound doped with Ti, V and/or Mn.

As described above, the lithium iron phosphate-based compound has a one-dimensional lithium migration path, and the diffusion length of lithium ions from the inside of the core to the surface may be increased. Accordingly, a mobility of lithium ions at the inside of the core may be decrease, and power properties of the secondary battery may be degraded. Further, charge/discharge capacity may be degraded when defects in the migration path of lithium ions are present.

The core may be doped with Ti, V and/or Mn, so that an additional movement path of the lithium ions other than Fe may be obtained in the crystal lattice of the lithium iron phosphate-based compound. Therefore, a three-dimensional movement path through the doped metal can be added in addition to the one-dimensional movement path through the octahedral site of the hexagonal system structure, so that the lithium ion conductivity at the inside of the entire particle may be improved.

Additionally, the lithium ion movement path of different routes may be obtained by Ti, V and/or Mn, so that the lithium diffusion rate at low temperature may be improved. Thus, high charge/discharge capacity and high power properties may be achieved even in a low-temperature environment.

Preferably, the core may be doped with Ti and/or V.

In some embodiments, the core may further contain another doping metal. For example, the lithium iron phosphate-based compound may be further doped with a transition metal other than Ti, V and Mn.

For example, the doping metal may include a transition metal such as Mg, Ca, Sr, Y, Zr, Ba, Ni or Co.

In some embodiments, a content of the doping metal in the core may be in a range from 300 ppm to 8,000 ppm, e.g., from 500 ppm to 6,000 ppm, or from 1,000 ppm to 3,000 ppm based on a total weight of the core. Within the above range, the ionic conductivity and low-temperature properties may be further improved while maintaining structural stability of the particle.

In example embodiments, the core may include a compound represented by Chemical Formula 1 below.

$$[\text{Chemical Formula 1}] \qquad \text{Li}_x\text{Fe}_y\text{M1}_a\text{M2}_b\text{P}_z\text{O}_4$$

In Chemical Formula 1, M1 may include at least one of Ti, V and Mn, and M2 may include at least one of Mg, Ca, Sr, Y, Zr, Ba, Ni and Co.

Herein, $1.02 \leq x \leq 1.56$, $0.99 \leq y \leq 1.01$, $0.96 \leq z \leq 1.04$, $0 < a \leq 0.9$ and $0 \leq b < 0.9$, and $0 < a+b \leq 0.9$.

The chemical structure represented by Chemical Formula 1 indicates a bonding relationship included in an olivine structure or a crystal structure of the cathode active material and does not exclude an introduction of an additional element. For example, M1 and M2 may serve as main active elements of the cathode active material. Chemical Formula 1 is provided to express the bonding relationship of the main active elements and should be understood as a formula encompassing the introduction and substitution of the additional element.

In an embodiment, an auxiliary element for enhancing chemical stability of the cathode active material or the crystal structure may be further included in addition to the main active elements. The auxiliary element may be incorporated into the crystal structure to form a bond, and this case is also included within the chemical structure represented by Chemical Formula 1.

The auxiliary element may include, e.g., at least one selected from the group consisting of Na, Hf, Ta, Cr, Cu, Ag, Ga, C, Si, Ra, P and S. The auxiliary element may act as an auxiliary active element contributing to the capacity/power activity of the cathode active material together with, e.g., Fe, Ti, Mn or V.

In some embodiments, the particle diameter of the core may be in a range from 50 nm to 35 $\mu$m. In an embodiment, the particle diameter of the core may be in a range from 0.1 $\mu$m to 25 $\mu$m, from 0.15 $\mu$m to 20 $\mu$m, or from 0.2 $\mu$m to 15 $\mu$m. The "particle diameter" may refer to the longest diameter or length of the particle.

For example, if the particle diameter of the core is less than 50 nm, the specific surface area of the particle may become greater to increase side reactions with the electrolyte solution, and the electrode density and energy density may be decreased due to a large amount of fine particles. Further, a relative area of the core to the carbon coating may be decreased to hinder a lithium diffusion.

For example, if the particle diameter of the core is greater than 35 $\mu$m, a moving distance of the lithium ions may be increased due to an increased particle size to degrade the capacity and power properties of the lithium secondary battery.

In some embodiments, the core may have a shape of a single particle, a secondary particle or a mixture thereof. The single particle and the secondary particle may be distinguished by a particle morphology. For example, the secondary particle and the single particle may be distinguished based on a cross-sectional image of the particle measured by a scanning electron microscope (SEM).

The secondary particle may refer to a particle that is substantially considered or observed as one particle by aggregation of a plurality of primary particles. For example, boundaries of the primary particles are observed in the SEM cross-sectional image of the secondary particle.

In an embodiment, the secondary particles may be an aggregate of more than 10, 30 or more, 50 or more, or 100 or more of the primary particles.

The single particle may refer to a particle (monolith) that is not an aggregate. For example, boundaries of the primary particles are not be observed in the SEM cross-sectional image of the single particle.

In some embodiments, a content of the carbon coating may be in a range from 0.5 wt% to 2.3 wt% based on a total weight of the lithium metal oxide particle. In an embodiment, the content of the carbon coating may be in a range from 1.0 wt% to 2.0 wt% based on the total weight of the lithium metal oxide particle.

For example, if the content of the carbon coating is less than 0.5 wt%, the coating amount by the carbon coating on the core may be insufficient. Accordingly, uniform coating may be not be easily formed, and the carbon coating may be present in the form of an island in a local area on the core.

For example, if the content of the carbon coating may exceed 2.3 wt%, the internal resistance of the lithium metal oxide particle may be increased due to an excessively thick carbon coating. Further, low-temperature power properties and a pressed density may become low due to a reduced coating uniformity on the core, and the energy density and capacity may be lowered due to an excessive carbon content.

In some embodiments, the carbon coating may have a thickness of 1 nm to 50 nm, e.g., from 2 nm to 10 nm.

As the thickness of the carbon coating becomes greater, the ionic conductivity and energy density may be lowered. Accordingly, the charge/discharge capacity and power properties of the lithium secondary battery may be degraded. As the thickness of the carbon coating becomes smaller, the contact between the core and the electrolyte may not be sufficiently blocked and the carbon coating may be damaged by a physical impact or a chemical reaction.

For example, the thickness of the carbon coating may be an arithmetic mean of values obtained by measuring a cross-section of the particle by an SEM or a TEM and measuring the thicknesses of the carbon coating at 30, 50, or 100 or more regions of the cross-sectional image.

In some embodiments, the carbon coating may include an amorphous carbon such as hard carbon, soft carbon, calcined coke, mesophase pitch carbide, etc., and/or a crystalline carbon such as natural graphite, artificial graphite, etc. These may be used alone or in a combination thereof.

In some embodiments, the average particle diameter ($D_{50}$) of the lithium metal oxide particles may be in a range from 0.2 $\mu$m to 20 $\mu$m, e.g., from 0.5 $\mu$m to 15 $\mu$m. The "average particle diameter ($D_{50}$)" may be a particle diameter at a volume fraction of 50% in a volume particle size distribution obtained by accumulating the lithium metal oxide particles from the smallest particle diameter.

Within the above range, the lithium secondary battery may have high power and capacity even at low temperature while maintaining high energy density and pressing density of the cathode active material.

The above-described lithium metal oxide is used as the cathode active material, so that the lithium secondary battery may have high capacity and power properties even at low temperature, and the energy density and cycle properties may be improved.

For example, both structural stability and thermal and chemical stability may be increased by including the lithium iron phosphate-based compound as the core of the cathode active material. Further, the lithium iron phosphate-based compound may have relatively low energy density and conductivity, but capacity and power properties may be improved by forming the carbon coating on the core and doping the core with the transition metal.

For example, a precursor (for example, a Li-Fe-Ti precursor) for preparing the lithium metal oxide may be prepared by a wet method or a solid phase method.

In the wet method, a mixed solution in which a lithium compound and a phosphoric acid compound are mixed may be prepared.

Examples of the lithium compound include lithium carbonate, lithium nitrate, lithium acetate, lithium oxide, lithium hydroxide, etc. Examples of the phosphoric acid compound include orthophosphoric acid, metaphosphoric acid, pyrophosphoric acid, triphosphoric acid, tetraphosphoric acid, ammonium phosphate, ammonium hydrogen phosphate, etc.

A metal salt may be added and reacted with the mixed solution. The metal salt may include a doping metal such as iron, titanium or vanadium. Examples of the metal salt containing iron include iron acetate, iron nitrate, iron sulfate and a hydrate thereof. Examples of the metal salt containing titanium include titanium hydroxide, titanium sulfate, titanium nitrate, and a hydrate thereof.

An aqueous solution may be prepared by mixing the metal salts in a ratio satisfying the content or concentration ratio of each metal described with reference to Chemical Formula 1. A transition metal precursor may be prepared by a hydrothermal reaction of the aqueous solution in a reactor.

A temperature of the hydrothermal reaction may be adjusted in a range from about 30 °C to 70 °C. A reaction time may be adjusted in a range from about 24 hours to 60 hours.

In the solid phase method, a lithium compound, an iron compound and a doped metal compound may be mixed and heat-treated.

For example, the lithium compound (e.g., $Li_2CO_3$), an iron compound (e.g., $FePO_4$) and a doping metal compound (e.g., $TiO_2$) may be mixed, and the mixture may be pulverized and dried. The metal compounds may be mixed in a ratio that satisfies the content or concentration ratio of each metal described with reference to Chemical Formula 1.

A first firing (calcination) process may be performed on the above dried and mixed powder.

A temperature of the first firing may be adjusted in, e.g., a range from about 300 °C to 350 °C. A reaction time can be adjusted in a range from about 24 hours to 60 hours.

A second firing (calcination) process may be performed to increase a crystallinity of the lithium metal oxide particles. In an embodiment, the second firing may be adjusted in a range from about 400 °C to 800 °C.

The carbon coating may be formed by a wet coating method or a dry coating method.

For example, in the wet coating method, a coating solution containing a carbon-based material may be mixed with the prepared precursor and stirred. Thereafter, the carbon-based material may be fixed on the core by a heat treatment or a drying to form the carbon coating.

The wet coating method may be performed by, e.g., a spray method, a coprecipitation method, a dipping method, a agitation and extrusion, etc.

The dry coating method may be performed using, e.g., a ball mill, a roller mill, a high energy mill, a stirred mill, a planetary mill, a vibration mill, a Nobilta mill, a mechanofusion, a high speed mixer, etc.

<Lithium secondary battery>

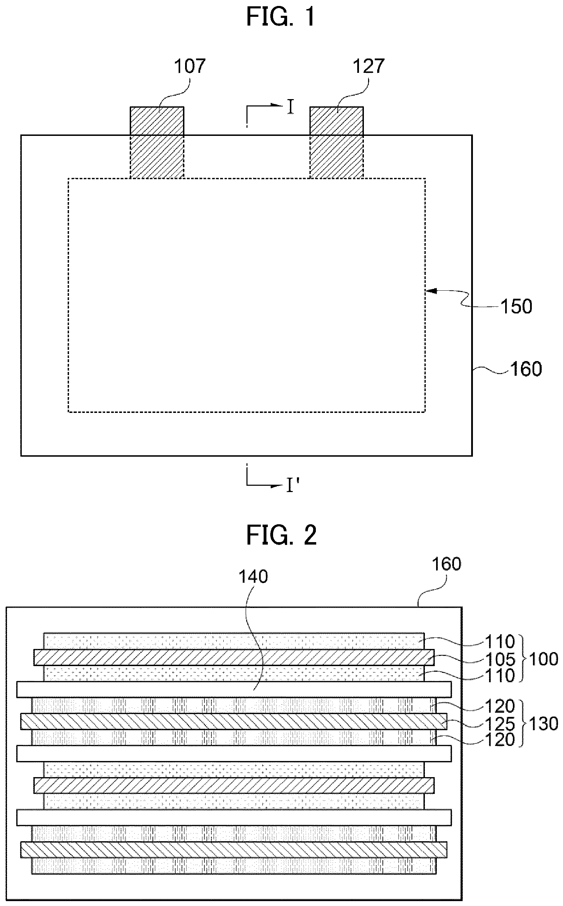

FIG. 1 is a schematic plan view illustrating a lithium secondary battery in accordance with exemplary embodiments. FIG. 2 is a schematic cross-sectional view illustrating a lithium secondary battery in accordance with exemplary embodiments. For example, FIG. 2 is a cross-sectional view taken along a line I-I' of FIG. 1 .

Constructions of the secondary battery are schematically illustrated in FIGS. 1 and 2 for convenience of descriptions, and the secondary battery of the present disclosure is not limited to the shape/structure illustrated in FIGS. 1 and 2.

Referring to FIGS. 1 and 2, the lithium secondary battery includes a cathode 100 including the cathode active material including the above-described lithium metal oxide particles and an anode 130 facing the cathode 100.

The cathode 100 may include a cathode active material layer 110 formed by coating the above-described cathode active material on a cathode current collector 105.

For example, a cathode slurry may be prepared by mixing and stirring a cathode active material with a binder, a conductive material and/or a dispersive agent in a solvent. The cathode slurry may be coated on at least one surface of the cathode current collector 105, and dried and pressed to form the cathode 100.

The cathode current collector 105 may include stainless steel, nickel, aluminum, titanium or an alloy thereof. The cathode current collector 105 may include aluminum or stainless steel surface-treated with carbon, nickel, titanium or silver.

The binder may include an organic based binder such as polyvinylidenefluoride (PVDF), a polyvinylidene fluoride-hexafluoropropylene copolymer (PVDF-co-HFP), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

The anode 130 may include an anode current collector 125 and an anode active material layer 120 formed by coating an anode active material on at least one surface of the anode current collector 125.

The anode active material may include a material capable of adsorbing and ejecting lithium ions. For example, a carbon-based material such as a crystalline carbon, an amorphous carbon, a carbon complex or a carbon fiber, a lithium alloy, silicon or tin may be used as the anode active material.

The amorphous carbon may include a hard carbon, cokes, a mesocarbon microbead (MCMB) fired at a temperature of 1500 °C or less, a mesophase pitch-based carbon fiber (MPCF), etc. The crystalline carbon may include a graphite-based material such as natural graphite, artificial graphite, graphitized cokes, graphitized MCMB, graphitized MPCF, etc. The lithium alloy may further include aluminum, zinc, bismuth, cadmium, antimony, silicon, lead, tin, gallium, indium, etc.

The anode current collector 125 may include, e.g., gold, stainless steel, nickel, aluminum, titanium, copper, or an alloy thereof. For example, the anode current collector 125 may include copper or a copper alloy.

In some embodiments, a slurry may be prepared by mixing and stirring the anode active material with a binder, a conductive material and/or a dispersive agent in a solvent. The slurry may be coated on the anode current collector 125, and then dried and pressed to form the anode 130.

The binder and the conductive material substantially the same as or similar to those used for the cathode active material layer 110 may be used in the anode 130. In some embodiments, the binder for forming the anode 130 may include an aqueous binder such as styrene-butadiene rubber (SBR) for a compatibility with, e.g., the carbon-based active material, and carboxymethyl cellulose (CMC) may also be used as a thickener.

A separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also include a nonwoven fabric formed from a glass fiber with a high melting point, a polyethylene terephthalate fiber, or the like.

In exemplary embodiments, the cathode 100 and the anode 130 may be repeatedly stacked with the separation layer 140 interposed therebetween to form an electrode assembly 150 that may have e.g., a jelly roll shape. For example, the electrode assembly 150 may be formed by winding, stacking or folding of the separation layer 140.

The electrode assembly 150 may be accommodated together with an electrolyte in a case 160 to define the lithium secondary battery. In exemplary embodiments, a non-aqueous electrolyte may be used as the electrolyte.

The non-aqueous electrolyte may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the outer case 160.

The lithium secondary battery may be manufactured in, e.g., a cylindrical shape using a can, a square shape, a pouch shape or a coin shape.

Hereinafter, preferred embodiments are proposed to more concretely describe the present invention.

Preparation Example

Example 1

(1) Preparation of cathode active material

Lithium carbonate as a lithium source, iron phosphate and glucose as a carbon coating source were put in distilled water, and particles were mixed and pulverized using a ball mill to form a mixed solution containing raw materials

of LiFePO$_4$.

The prepared LiFePO$_4$-containing mixed solution was dried using a micro-nozzle type spray dryer.

The dried powder was mixed with TiO$_2$ and calcined at a temperature of about 300 °C to 1000 °C for about 3 to 10 hours under a nitrogen atmosphere, and then subjected to classification and de-iron processes to prepare lithium metal phosphate particles.

(2) Measurement of G band, D band and PO$_4$ peak intensities

Raman spectroscopic analysis was performed on the prepared cathode active material. Specifically, 1,000 random points were designated for a group of dispersed cathode active material particles, a laser having a wavelength of about 530 nm was exposed and scanned for 5 seconds with a power of 10 mV for each point to measure an intensity of each point for each wavelength. Thereafter a Raman spectrum was obtained by fitting the average values of the intensity of each point for each wavelength.

From the obtained Raman spectrum, a D band intensity (a maximum value of a peak between 1200 cm$^{-1}$ and 1400 cm$^{-1}$), a G band intensity (a maximum value of a peak between 1500 cm$^{-1}$ and 1700 cm$^{-1}$), and a PO$_4$ peak intensity (a maximum value of a peak between 945 cm$^{-1}$ to 955 cm$^{-1}$) was calculated. Thereafter, the calculated values were shifted based on a center (1000 cm$^{-1}$), and then deconvolution was performed to calculate PO$_4$/G, PO$_4$/D and D/G ratios.

(3) Measurement of carbon coating content

A weight ratio of carbon in the cathode active material was analyzed using a carbon sulfur content analyzer. A content of the carbon coating was calculated from the analyzed weight ratio (wt%). The measurement results are shown in Table 1 below.

Example 2

A cathode active material was prepared by the same method as that in Example 1, except that the carbon coating source was used to obtain the carbon coating content as shown in Table 1 below.

Example 3

A cathode active material was prepared by the same method as that in Example 1, except that the carbon coating source was used to obtain the carbon coating content as shown in Table 1 below.

Example 4

A cathode active material was prepared by the same method as that in Example 1, except that the carbon coating source was used to obtain the carbon coating content shown in Table 1 below.

Example 5

A cathode active material was prepared by the same method as that in Example 1, except that the carbon coating source was used to obtain the carbon coating content shown in Table 1 below.

Comparative Example 1

A cathode active material was prepared by the same method as that in Example 1, except that the carbon coating source was used to obtain the carbon coating content shown in Table 1 below and a slurry feeding amount from the spray dryer during drying of the mixed solution containing the raw materials of LiFePO$_4$ was increased by 150% compared to that of Example 1.

Comparative Example 2

A cathode active material was prepared by the same method as that in Comparative Example 1, except that the carbon coating source was used to obtain the carbon coating content shown in Table 1 below.

Comparative Example 3

A cathode active material was prepared by the same method as that in Comparative Example 1, except that the carbon coating source was used to obtain the carbon coating content shown in Table 1 below.

The $PO_4/G$, $PO_4/D$ and D/G ratios, and the carbon coating contents of the prepared cathode active materials of Examples and Comparative Examples were measured by the same manner as described in Example 1.

The measurement results are shown in Table 1 below.

[Table 1]

| | intensity ratio between $PO_4$ peak and D band peak ($PO_4/D$) | intensity ratio between $PO_4$ peak and G band peak ($PO_4/G$) | intensity ratio D band peak and G band peak (D/G) | carbon coating content (wt%) |
|---|---|---|---|---|
| Example 1 | 0.12 | 0.11 | 0.90 | 1.7 |
| Example 2 | 0.15 | 0.13 | 0.89 | 1.5 |
| Example 3 | 0.17 | 0.14 | 0.85 | 1.3 |
| Example 4 | 0.22 | 0.20 | 0.92 | 1.01 |
| Example 5 | 0.16 | 0.13 | 0.81 | 2.5 |
| Comparative Example 1 | 0.35 | 0.31 | 0.88 | 1.1 |
| Comparative Example 2 | 0.06 | 0.05 | 0.87 | 3.0 |
| Comparative Example 3 | 0.08 | 0.07 | 0.91 | 2.5 |

Experimental Example

(1) Fabrication of Coin cell

Coin cells (target capacity: 160 mAh/g) were fabricated using the cathode active materials of Examples and Comparative Examples. Specifically, a cathode slurry was prepared by mixing the cathode active material, Denka Black as a conductive material and PVDF as a binder in a mass ratio of 93:5:2, respectively. The cathode slurry was coated on an aluminum current collector, and then dried and pressed to form a cathode. A lithium counter electrode was used as an anode.

An electrode cell was formed by interposing a separator (polyethylene, thickness 13 $\mu$m) between the anode and the cathode. The electrode cell was placed in an exterior material and assembled after injecting an electrolyte solution, and then aged for 12 hours or more so that the electrolyte solution could impregnate the electrodes. A 1M $LiPF_6$ solution using a mixed solvent of EC/EMC (30/70; volume ratio) was used as the electrolyte solution as the electrolyte solution.

(2) Initial capacity of coin cell

After the fabrication of the coin cell, the coin cell was charged (CC-CV 0.1C, 4.3V, 0.005C cut-off) and discharged (CC 0.1C, 3.0V cut-off) to measure an initial discharge capacity.

(3) Measurement of pressed density

When manufacturing the coin cells of Examples and Comparative Examples, the cathode was formed by pressing the slurry coated on the current collector with the same pressure (2.5 ton).

The cathode of the prepared coin cell to a size of 12pi (diameter: 12mm), the pressed density was measured based on the following formula.

$$\text{Pressed density (g/cc)} = \text{(weight of cathode - weight of cathode current}$$

$$\text{collector)} / \{(\text{total thickness of cathode - thickness of cathode current collector)} * \text{area of}$$

$$12\text{pi}\}$$

(4) Low temperature power property

Power properties of the lithium secondary batteries of the above-described Examples and Comparative Examples were evaluated at room temperature (25 °C) by an HPPC (Hybrid Pulse Power Characterization by FreedomCar Battery Test Manual) method. Thereafter, power properties were evaluated at a temperature of -20 °C compared to those at room temperature by the same method, and the low-temperature power properties were evaluated as percentages relative to the power at the room temperature.

The evaluation results are shown in Table 2 below.

[Table 2]

|  | initial capacity (mAh/g) | pressed density (g/cc) | low temperature power (%) |
|---|---|---|---|
| Example 1 | 160.6 | 2.41 | 70.3 |
| Example 2 | 160.8 | 2.42 | 66.8 |
| Example 3 | 161.1 | 2.44 | 65.7 |
| Example 4 | 161.0 | 2.45 | 65.5 |
| Example 5 | 157.5 | 2.29 | 70.1 |
| Comparative Example 1 | 155.5 | 2.44 | 37.2 |
| Comparative Example 2 | 155.1 | 2.25 | 71.5 |
| Comparative Example 3 | 157.3 | 2.28 | 70.8 |

Referring to Tables 1 and 2, the secondary batteries according to Examples had Raman spectral values ($PO_4$/G, $PO_4$/D) of the cathode active material within a desired range, and the initial capacity, the pressed density and the power property were all improved.

However, in the secondary batteries according to Comparative Examples, the initial capacity, the pressed density and the power property were deteriorated.

For example, in Comparative Example 1 where the $PO_4$/G and $PO_4$/D values of the cathode active material were higher than those of Examples, the initial capacity and the low-temperature power property were deteriorated. In Comparative Examples 2 and 3 where the $PO_4$/G and $PO_4$/D values of the cathode active material were lower than those of Examples, the initial capacity and the pressed density of the electrode were degraded.

According to embodiments of the above-described present disclosure, the $PO_4$/G and $PO_4$/D ratios of the cathode active material are adjusted in the desired ranges, so that the carbon coating may be uniformly formed to have a small thickness and high pressed density without degradation of the capacity and power.

**Claims**

1.   A cathode active material for a lithium secondary battery comprising a plurality of a lithium metal oxide particle that comprises a core containing a lithium iron phosphate-based compound and being doped with at least one metal element of Ti, V and Mn; and a carbon coating formed on the core,
   wherein a ratio of an intensity of a peak corresponding to $PO_4$ relative to an intensity of a D band measured by a Raman spectroscopy analysis is in a range from 0.10 to 0.33.

2.   The cathode active material for a lithium secondary battery according to claim 1, wherein the intensity of the D band is a maximum value of a peak intensity measured at a Raman shift from 1200 $cm^{-1}$ to 1400 $cm^{-1}$, and
   the intensity of the peak corresponding to $PO_4$ is a maximum value of a peak intensity measured at a Raman shift

from 945 cm$^{-1}$ to 955 cm$^{-1}$.

3.  The cathode active material for a lithium secondary battery according to any one of claims 1 and 2, wherein the ratio of the intensity of the peak corresponding to PO$_4$ relative to the intensity of the D band measured by the Raman spectroscopy analysis is greater than 0.10 and less than or equal to 0.30.

4.  The cathode active material for a lithium secondary battery according to any one of claims 1 to 3, wherein a ratio of the intensity of the peak corresponding to PO$_4$ relative to an intensity of a G band measured by the Raman spectroscopy analysis is in a

5.  The cathode active material for a lithium secondary battery according to claim 4, wherein the intensity of the G band is a maximum value of a peak intensity measured at a Raman shift from 1,500 cm$^{-1}$ to 1,700 cm$^{-1}$.

6.  The cathode active material for a lithium secondary battery according to claim 4, wherein the ratio of the intensity of the peak corresponding to PO$_4$ relative to the intensity of the G band measured by the Raman spectroscopy analysis is in a range from 0.7 to 1.1.

7.  The cathode active material for a lithium secondary battery according to any one of claims 1 to 6, wherein a doping content of the metal element in the core is in a range from 300 ppm to 8,000ppm based on a total weight of the core.

8.  The cathode active material for a lithium secondary battery according to any one of claims 1 to 7, wherein the core is doped with Ti or V

9.  The cathode active material for a lithium secondary battery according to any one of claims 1 to 7, wherein the core further contains another doping metal other than Ti, V and Mn.

10. The cathode active material for a lithium secondary battery according to any one of claims 1 to 7, wherein the core includes a compound represented by Chemical Formula 1 below:

    [Chemical Formula 1]    $Li_xFe_yM1_aM2_bP_zO_4$

    wherein, in Chemical Formula 1, M1 includes at least one of Ti, V and Mn, and M2 includes at least one of Mg, Ca, Sr, Y, Zr, Ba, Ni and Co, and
    $0.9 \leq x \leq 1.1$, $0.1 \leq y \leq 1.01$, $0.96 \leq z \leq 1.04$, $0 < a \leq 0.9$, $0 \leq b < 0.9$ and $0 < a+b \leq 0.9$.

11. The cathode active material for a lithium secondary battery according to any one of claims 1 to 10, wherein a content of the carbon coating is in a range from 0.5 wt% to 2.3 wt% based on a total weight of the lithium metal oxide particle.

12. The cathode active material for a lithium secondary battery according to any one of claims 1 to 11, wherein a thickness of the carbon coating is in a range from 1 nm to 50 nm.

13. The cathode active material for a lithium secondary battery according to any one of claims 1 to 12, wherein an average particle diameter (D50) of the plurality of lithium metal oxide particle is in a range from 0.2 $\mu$m to 15 $\mu$m.

14. A lithium secondary battery, comprising:

    a cathode comprising the cathode active material for a lithium secondary battery of any one of claims 1 to 13; and
    an anode facing the cathode.

# FIG. 1

# FIG. 2

Europäisches
Patentamt

European
Patent Office

Office européen
des brevets

# EUROPEAN SEARCH REPORT

**Application Number**

EP 23 19 1888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 020 678 A (ENVISION POWER TECH JIANGSU CO LTD ET AL.) 6 September 2022 (2022-09-06) | 1,3-14 | INV. H01M4/36 H01M4/525 H01M4/58 H01M4/62 |
| A | * paragraph [0008]; example 1 * ----- | 2 | |

TECHNICAL FIELDS
SEARCHED      (IPC)

H01M

The present search report has been drawn up for all claims

| Place of search | Date of completion of the search | Examiner |
|---|---|---|
| Munich | 13 May 2024 | Meini, Stefano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .........................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 1888

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2024

| Patent document cited in search report | Publication date | Patent family member(s) | Publication date |
|---|---|---|---|
| CN 115020678 A | 06-09-2022 | NONE | |

EPO FORM P0459